# EUROPEAN PATENT APPLICATION

(11) **EP 3 106 679 A1**
(43) Date of publication of application: **21.12.2016**
(21) Application number: 16173208.6
(22) Date of filing: 07.06.2016
(51) Int. Cl.: F16B 5/04, B23K 11/11, B23K 11/20, F16B 5/08, F16B 19/08

(54) **DISSIMILAR MATERIAL JOINING MEMBER, DISSIMILAR MATERIAL JOINED STRUCTURE, METHOD FOR MANUFACTURING DISSIMILAR MATERIAL JOINED BODY**

(30) Priority: 15.06.2015 JP 2015120137
(71) Applicant: Toyota Jidosha Kabushiki Kaisha, Toyota-shi, Aichi-ken, 471-8571 (JP)
(72) Inventor: IZUHARA, Tsuyoshi, Toyota-shi, Aichi-ken 471-8571 (JP)
(74) Representative: Intès, Didier Gérard André

(57) **Abstract**

A dissimilar material joining member includes a tubular portion, a flange portion (24), a deformation-scheduled portion to be clinched, a first joining component (14) made of metal, and a second joining component (16) made of metal. The tubular portion passes through a first joining-object member (18) made of resin. The flange portion (24) is extended in a flange shape to a radially outer side of the tubular portion from one axial end of the tubular portion. The deformation-scheduled portion is the other axial end side of the tubular portion. In the first joining component (14), the deformation-scheduled portion holds the first joining-object member (18) between the deformation-scheduled portion and the flange portion (24) by being bent such that a center portion in a direction along the axial direction is expanded to the radially outer side to form a fold-back portion when a compressive load equal to or greater than a predetermined value is axially applied to the tubular portion.

## Description

### BACKGROUND OF THE INVENTION

### 1. Field of the Invention

The present disclosure relates to a dissimilar material joining member, a dissimilar material joined structure, and a method for manufacturing a dissimilar material joined body.

### 2. Description of Related Art

A technique for joining dissimilar materials together has been known (see Japanese Patent Application Publication Nos. 2013-22622 and 2011-189698). For example, JP 2013-22622 A discloses an invention for joining a steel member and an aluminum alloy member by using a piercing metal made of steel. Briefly, in the prior art, the piercing metal made of steel that passes through the aluminum alloy member is clinched, and the piercing metal made of steel and the steel member are joined together by spot welding. In the prior art, in a head portion of the piercing metal made of steel, a groove portion is formed in a surface superimposed on the aluminum alloy member so as to surround a shaft portion, and a portion of the aluminum alloy member pressed in clinching flows into the groove portion.

### SUMMARY OF THE INVENTION

There is a need to join a metal member and a resin member. For example, when a resin member is applied instead of the aluminum alloy member described in JP 2013-22622 A described above, drawbacks occur such as cracking and creep of the resin member in association with clinching.

In consideration of the above circumstances, an object of the present disclosure is to obtain a dissimilar material joining member, a dissimilar material joined structure, and a method for manufacturing a dissimilar material joined body, in which a joining-object member made of metal and a joining-object member made of resin can be suitably joined together.

In a first aspect of the present disclosure, a dissimilar material joining member includes a tubular portion, a flange portion, a deformation-scheduled portion to be clinched, a first joining component made of metal, and a second joining component made of metal. The tubular portion passes through a first joining-object member made of resin. The flange portion is extended in a flange shape to a radially outer side of the tubular portion from one end in an axial direction of the tubular portion. The deformation-scheduled portion to be clinched is the other end side in the axial direction of the tubular portion. In the first joining component made of metal, the deformation-scheduled portion holds the first joining-object member between the deformation-scheduled portion and the flange portion by being bent such that a center portion in a direction along the axial direction of the tubular portion is expanded to the radially outer side of the tubular portion to form a fold-back portion when a compressive load equal to or greater than a predetermined value is applied to the tubular portion in the axial direction. The second joining component made of metal is formed in a short cylindrical shape, and is fixed to the tubular portion of the first joining component when the second joining component is coaxially inserted into the tubular portion, and is spot-welded to a second joining-object member made of metal at one end surface in the axial direction of the second joining component.

In accordance with the above aspect, in the dissimilar material joining member, the second joining component formed in a short cylindrical shape and made of metal is fixed to the tubular portion of the first joining component made of metal when the second joining component is coaxially inserted into the tubular portion. In the first joining component, the tubular portion passes through the first joining-object member made of resin, the flange portion is extended in a flange shape to the radially outer side of the tubular portion from the one end in the axial direction of the tubular portion, and the other end side in the axial direction of the tubular portion is formed as the deformation-scheduled portion to be clinched. The deformation-scheduled portion holds the first joining-object member between the deformation-scheduled portion and the flange portion by being bent such that the center portion in the direction along the axial direction of the tubular portion is expanded to the radially outer side of the tubular portion to form the fold-back portion when a compressive load equal to or greater than a predetermined value is applied to the tubular portion in the axial direction.

Therefore, it is possible to fix the first joining component to the first joining-object member while suppressing local load input to the first joining-object member. Also, since a distal-end opening portion of the deformation-scheduled portion (that is, an opening end on the other end side in the axial direction of the tubular portion) is not increased in diameter (or is almost not increased in diameter) when the deformation-scheduled portion to be clinched is folded back and deformed as described above, a situation in which the distal-end opening portion of the deformation-scheduled portion cracks during clinching can be avoided (or is highly likely to be avoided). Also, in the second joining component, the one end surface in the axial direction is spot-welded to the second joining-object member made of metal. Accordingly, the second joining-object member made of metal is joined to the first joining-object member made of resin via the second joining component and the first joining component.

In the above aspect, a proximal portion of the deformation-scheduled portion may include a first tapered surface. The first tapered surface is inclined to a radially inner side of the tubular portion toward an opposite side to a distal end edge side of the deformation-scheduled portion by cutting away an outer peripheral surface of the proximal portion over an entire periphery. A distal end portion of the deformation-scheduled portion may include a second tapered surface. The second tapered surface is inclined to the radially inner side of the tubular portion toward the distal end edge side of the deformation-scheduled portion by cutting away an outer peripheral surface of the distal end portion over an entire periphery.

In accordance with the above aspect, when the compressive load equal to or greater than the predetermined value is applied to the tubular portion in the axial direction, a load along an inclination direction of the first tapered surface is applied to the proximal portion of the deformation-scheduled portion, and a load along an inclination direction of the second tapered surface is applied to the distal end portion of the deformation-scheduled portion. The deformation-scheduled portion is deformed by the loads applied as described above so as to be bent to the radially outer side of the tubular portion from the proximal portion, and be folded back at an intermediate portion between the proximal portion and the distal end portion of the deformation-scheduled portion. Therefore, when the compressive load equal to or greater than the predetermined value is applied to the tubular portion in the axial direction when the flange portion is brought into contact with the first joining-object member by passing the tubular portion through the first joining-object member, the deformation-scheduled portion is deformed as described above, and the first joining-object member is held between the flange portion and the deformation-scheduled portion.

In the above aspect, the proximal portion may include a step surface. The step surface forms a groove portion having a V shape in section together with the first tapered surface, and is set to be perpendicular to the axial direction of the tubular portion.

In accordance with the above aspect, the step surface that is formed on the proximal portion of the deformation-scheduled portion forms the groove portion having a V shape in section together with the first tapered surface, and is set to be perpendicular to the axial direction of the tubular portion. Therefore, when the compressive load equal to or greater than the predetermined value is applied to the tubular portion in the axial direction, the deformation-scheduled portion can be stably bent along a direction perpendicular to the axial direction of the tubular portion from the proximal portion. Therefore, when the deformation-scheduled portion is bent and deformed to the radially outer side of the tubular portion, the first joining-object member is stably held between the flange portion and the deformation-scheduled portion.

In a second aspect of the invention, a dissimilar material joined structure includes a first joining-object member made of resin, a tube portion, a flange portion, a first joining component made of metal, a second joining component made of metal, and a second joining-object member made of metal. The tube portion passes through the first joining-object member. The flange portion is extended in a flange shape to a radially outer side of the tube portion from one end in an axial direction of the tube portion. The first joining component made of metal includes a clinched portion. The clinched portion is extended in a flange shape to the radially outer side of the tube portion from the other end in the axial direction to hold the first joining-object member between the clinched portion and the flange portion, and includes a fold-back end portion folded back to an opposite side to the flange portion and to a radially inner side of the tube portion. The fold-back end portion is set at a position overlapping the tube portion as viewed in the axial direction. The second joining component made of metal is formed in a short cylindrical shape, and is fixed to the tube portion of the first joining component when the second joining component is coaxially inserted into the tube portion. The second joining-object member made of metal is disposed facing the first joining-object member, and one end surface in the axial direction of the second joining component is spot-welded to the second joining-object member.

In accordance with the above aspect, in the first joining component made of metal, the tube portion passes through the first joining-object member made of resin, and the flange portion extended to the radially outer side of the tube portion from the one end in the axial direction of the tube portion and the clinched portion including a portion extended in a flange shape to the radially outer side of the tube portion from the other end in the axial direction of the tube portion hold the first joining-object member. Therefore, it is possible to fix the first joining component to the first joining-object member while suppressing local load input to the first joining-object member. Also, the clinched portion is folded back to the opposite side to the flange portion and to the radially inner side of the tube portion from the flange-shaped portion that holds the first joining-object member between the flange-shaped portion and the flange portion, and the fold-back end portion is set at a position overlapping the tube portion as viewed in the axial direction of the tube portion. That is, in such a configuration, a distal-end opening portion of the clinched portion (that is, an opening end composed of the fold-back end portion) has about the same diameter as that of the tube portion. Thus, it is not necessary (or it is almost not necessary) to increase the diameter of the distal-end opening portion of the clinched portion during clinching. Therefore, a situation in which the distal-end opening portion of the clinched portion cracks during clinching can be avoided (or is highly likely to be avoided).

Also, the second joining component made of metal is formed in a short cylindrical shape, and is fixed to the tube portion of the first joining component when the second joining component is coaxially inserted into the tube portion. The one end surface in the axial direction of the second joining component is spot-welded to the second joining-object member made of metal that is disposed facing the first joining-object member. That is, the second joining-object member made of metal is joined to the first joining-object member made of resin via the second joining component and the first joining component.

A method for manufacturing a dissimilar material joined body using the dissimilar material joining member according to the first aspect includes a) to c) described below:
a) bringing the flange portion into contact with the first joining-object member by passing the tubular portion through the first joining-object member;
b) after performing the contact, bending the deformation-scheduled portion such that the center portion in the direction along the axial direction in the deformation-scheduled portion is expanded to the radially outer side of the tubular portion to form the fold-back portion, and holding the first joining-object member between the bent deformation-scheduled portion and the flange portion; and
c) after performing the holding, spot-welding the one end surface in the axial direction of the second joining component to the second joining-object member by disposing the second joining-object member facing the first joining-object member.

In accordance with the above aspect, in the bringing the flange portion into contact with the first joining-object member, the flange portion is brought into contact with the first joining-object member by passing the tubular portion through the first joining-object member. In the holding after the bringing the flange portion into contact with the first joining-object member, the deformation-scheduled portion is bent such that the center portion in the direction along the axial direction of the tubular portion in the deformation-scheduled portion is expanded to the radially outer side of the tubular portion to form the fold-back portion, and the first joining-object member is held between the bent deformation-scheduled portion and the flange portion. Therefore, it is possible to fix the first joining component to the first joining-object member while suppressing local load input to the first joining-object member. Also, since the distal-end opening portion of the deformation-scheduled portion is not increased in diameter (or is almost not increased in diameter) when the deformation-scheduled portion to be clinched is folded back and deformed as described above, the situation in which the distal-end opening portion of the deformation-scheduled portion cracks in the holding (that is, during clinching) can be avoided (or is highly likely to be avoided). In the spot-welding after the holding, the one end surface in the axial direction of the second joining component is spot-welded to the second joining-object member by disposing the second joining-object member facing the first joining-object member. Accordingly, the second joining-object member made of metal can be joined to the first joining-object member made of resin via the second joining component and the first joining component.

As described above, the invention has an excellent effect that the second joining-object member made of metal and the first joining-object member made of resin can be suitably joined together.

### BRIEF DESCRIPTION OF THE DRAWINGS

Features, advantages, and technical and industrial significance of exemplary embodiments of the invention will be described below with reference to the accompanying drawings, in which like numerals refer to like parts, and wherein:
FIG. 1 is a sectional view illustrating a dissimilar material joining member according to a first embodiment of the present disclosure;
FIG. 2A is a sectional view illustrating a first step of a method for manufacturing a dissimilar material joined body using the dissimilar material joining member in FIG. 1;
FIG. 2B is a sectional view illustrating a second step of the method for manufacturing a dissimilar material joined body using the dissimilar material joining member in FIG. 1;
FIG. 2C is a sectional view illustrating a third step of the method for manufacturing a dissimilar material joined body using the dissimilar material joining member in FIG. 1;
FIG. 3 is a sectional view illustrating a dissimilar material joining member according to a second embodiment of the present disclosure;
FIG. 4A is a sectional view illustrating a step of forming a through-hole in a first joining-object member by using the dissimilar material joining member in FIG. 3, and shows a state in which the dissimilar material joining member starts to press the first joining-object member; and
FIG. 4B is a sectional view illustrating the step of forming a through-hole in a first joining-object member by using the dissimilar material joining member in FIG. 3, and shows a state in which the dissimilar material joining member forms the through-hole in the first joining-object member.

### DETAILED DESCRIPTION OF EMBODIMENTS

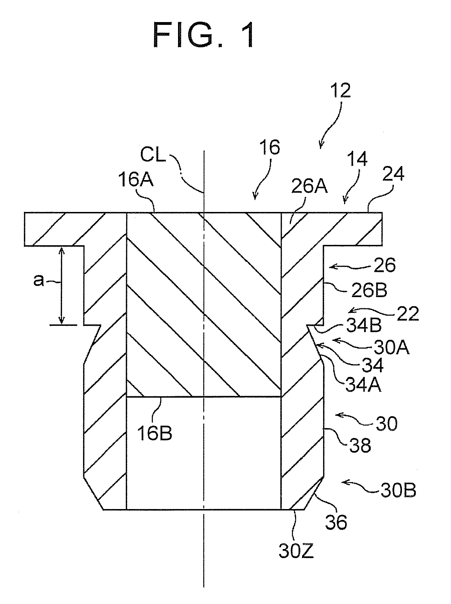

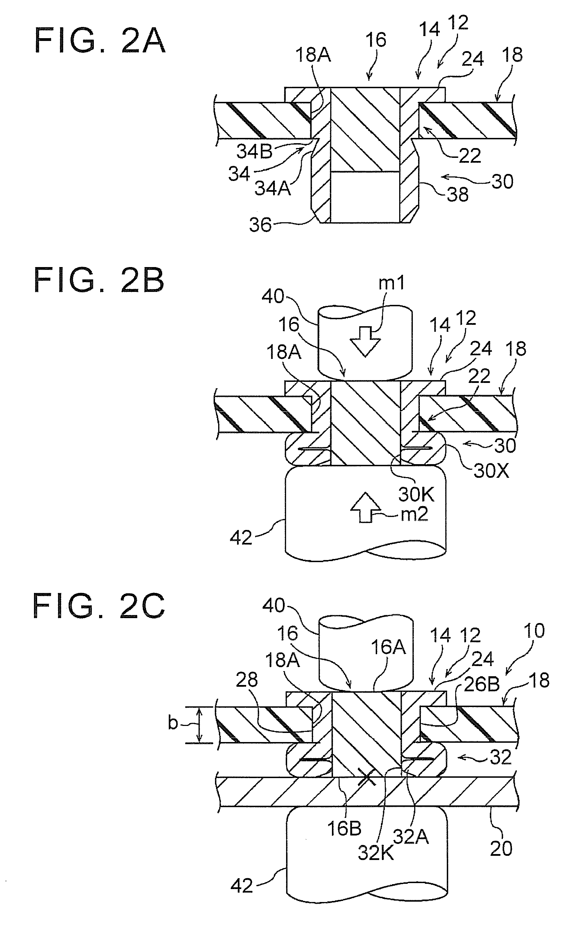

[First Embodiment] A dissimilar material joining member, a dissimilar material joined structure, and a method for manufacturing a dissimilar material joined body according to a first embodiment of the present disclosure will be described in reference to FIGS. 1, 2. FIG. 1 shows a sectional view of a dissimilar material joining member 12 according to the present embodiment, the dissimilar material joining member 12 being cut along an axial direction of the dissimilar material joining member 12. FIGS. 2A, 2B, 2C show sectional views of respective steps of a method for manufacturing a dissimilar material joined body 10 using the dissimilar material joining member 12.

As shown in FIG. 1, the dissimilar material joining member 12 has a dual structure in which an outer peripheral portion of the dissimilar material joining member 12 is composed of a first joining component 14 made of metal, and a center portion is composed of a second joining component 16 made of metal. The first joining component 14 is a constituent portion that can clinch a first joining-object member 18 (see FIGS. 2A, 2B, 2C) made of fiber reinforced resin (FRP), and the second joining component 16 is a constituent portion that can be spot-welded to a second joining-object member 20 (see FIG. 2C) made of metal (for example, made of steel).

Note that a fiber reinforced resin material forming the first joining-object member 18 shown in FIGS. 2A, 2B, 2C is a composite material (for example, a carbon fiber reinforced resin (CFRP) material) formed by bonding fibers (reinforcing fibers) with resin. The first joining-object member 18 may be, for example, a floor panel that constitutes a floor portion of a vehicle. The second joining-object member 20 may be, for example, a rocker panel (also referred to as a "side sill") that constitutes a lower end portion of both sides of a vehicle body.

The first joining component 14 shown in FIG. 1 includes a tubular portion 22 that is formed in a circular tube shape, and also includes a flange portion 24 that extends in a flange shape toward a radially outer side of the tubular portion 22 from one end in an axial direction (an upper end in the drawings) of the tubular portion 22. Note that an axis of the tubular portion 22 is identified by reference character CL in the drawings. The tubular portion 22 of the first joining component 14 is a portion that passes through the first joining-object member 18 (see FIGS. 2A, 2B, 2C).

Also, in the tubular portion 22, one end side in the axial direction (an upper side in the drawings) is a flange-side tubular portion 26 that is connected with the flange portion 24, and the other end side in the axial direction (a lower side in the drawings) is a deformation-scheduled portion 30 to be clinched. The flange-side tubular portion 26 is composed of a connection end portion 26A that is connected with an inner peripheral side of the flange portion 24, and a tube-shaped short-pipe portion 26B that is connected with the connection end portion 26A. In use, the short-pipe portion 26B is disposed on an inner peripheral side of a through-hole 18A of the first joining-object member 18 as shown in FIG. 2C. An axial length a (see FIG. 1) of the short-pipe portion 26B is set so as to match a length b in a plate thickness direction of the first joining-object member 18.

As shown in FIG. 1, a groove portion 34 having a V shape in section is formed on a proximal portion 30A of the deformation-scheduled portion 30 by cutting away an outer peripheral surface of the proximal portion 30A over an entire periphery. The groove portion 34 is provided for inducing bending of the deformation-scheduled portion 30 during clinching (as a trigger for bending). The groove portion 34 is composed of a first tapered surface 34A and a step surface 34B. The first tapered surface 34A is inclined toward a radially inner side of the tubular portion 22 and toward an opposite side to a distal end edge side (the lower side in the drawings) of the deformation-scheduled portion 30. Also, the step surface 34B is set to be perpendicular to the axial direction of the tubular portion 22. Respective end portions on the radially inner side of the tubular portion 22 of the first tapered surface 34A and the step surface 34B are connected together.

Also, a second tapered surface 36 is formed on a distal end portion 30B of the deformation-scheduled portion 30 by cutting away an outer peripheral surface of the distal end portion 30B over an entire periphery. The second tapered surface 36 is provided for inducing bending of the deformation-scheduled portion 30 during clinching. The second tapered surface 36 is inclined toward the radially inner side of the tubular portion 22 and toward the distal end edge side of the deformation-scheduled portion 30.

The deformation-scheduled portion 30 holds the first joining-object member 18 between the deformation-scheduled portion 30 and the flange portion 24 by being bent such that a center portion in a direction along the axial direction of the tubular portion 22 is expanded to the radially outer side of the tubular portion 22 to form a fold-back portion 30X as shown in FIG. 2B when a compressive load equal to or greater than a predetermined value is applied to the tubular portion 22 in the axial direction.

That is, in the deformation-scheduled portion 30 shown in FIG. 1, a portion connecting a formation portion of the groove portion 34 and a formation portion of the second tapered surface 36 is a bulging-scheduled portion 38, which is a portion bulging radially outward when the compressive load equal to or greater than the predetermined value is applied to the tubular portion 22 in the axial direction. The bulging-scheduled portion 38 is a portion for ensuring a line length of a portion that is folded back when the compressive load is applied to the tubular portion 22 in the axial direction.

On the other hand, the second joining component 16 is fixed to the tubular portion 22 of the first joining component 14 when the second joining component 16 is coaxially inserted into the tubular portion 22. The second joining component 16 is formed in a short circular cylindrical shape, and an axial length of the second joining component 16 is set according to an axial length of the first joining component 14 in a state after the first joining component 14 is subjected to clinching. Although illustration is omitted, the second joining component 16 is fixed to an inner peripheral surface of the short-pipe portion 26B of the first joining component 14 with the short-pipe portion 26B being pressurized from an outer peripheral surface side of the short-pipe portion 26B and clinched after the second joining component 16 is inserted into the tubular portion 22 of the first joining component 14.

Note that a close contact region between an outer peripheral surface of the second joining component 16 and the inner peripheral surface of the short-pipe portion 26B may extend over an entire region, or may be set intermittently in a circumferential direction (in other words, a portion projecting to the radially inner side may be set intermittently in the circumferential direction on the inner peripheral surface of the short-pipe portion 26B). Also, for example, a fitting recessed portion may be previously formed in the outer peripheral surface of the second joining component 16 at a portion corresponding to the short-pipe portion 26B of the first joining component 14, and a portion of the inner peripheral surface of the short-pipe portion 26B of the first joining component 14 may be fitted to the recessed portion of the outer peripheral surface of the second joining component 16 with the short-pipe portion 26B being pressurized from the outer peripheral surface side and clinched after the second joining component 16 is inserted into the tubular portion 22 of the first joining component 14.

In the second joining component 16, a first end surface 16A that is exposed from an opening portion on the one axial end side (the upper side in the drawings) of the tubular portion 22 of the first joining component 14 is made flush with a surface of the flange portion 24. A second end surface 16B that is a surface opposite to the first end surface 16A in the second joining component 16 is set at a position retracted inward from an opening portion on the other axial end side (the lower side in the drawings) of the tubular portion 22 of the first joining component 14. To be more specific, the second end surface 16B of the second joining component 16 is set on an inner side of the bulging-scheduled portion 38.

As shown in FIG. 2C, the second end surface 16B (one axial end surface) of the second joining component 16 is spot-welded to the second joining-object member 20 made of metal in the present embodiment. Although the second end surface 16B of the second joining component 16 is spot-welded to the second joining-object member 20 as one example in the present embodiment, the first end surface 16A of the second joining component 16 maybe spot-welded to the second joining-object member 20.

(Dissimilar material joined structure) Next, the dissimilar material joined structure in which the first joining-object member 18 made of resin and the second joining-object member 20 made of metal are joined together via the dissimilar material joining member 12 (the first joining component 14 and the second joining component 16) will be described. In FIG. 2C, the dissimilar material joined body 10 to which the dissimilar material joined structure of the present disclosure is applied is shown between a pair of electrodes 40, 42 described later.

The first joining component 14 made of metal includes a circular tube portion 28 as a tube portion passing through the first joining-object member 18. Note that the circular tube portion 28 is formed by the flange-side tubular portion 26 and one portion on the proximal portion 30A of the deformation-scheduled portion 30 shown in FIG. 1. Also, as shown in FIG. 2C, the first joining component 14 includes the flange portion 24 that extends in a flange shape toward a radially outer side of the circular tube portion 28 from one axial end (the upper side in the drawings) of the circular tube portion 28, and also includes a clinched portion 32 that is formed continuously to the other axial end of the circular tube portion 28.

The clinched portion 32 extends in a flange shape toward the radially outer side of the circular tube portion 28 from the other axial end of the circular tube portion 28 to hold the first joining-object member 18 between the clinched portion 32 and the flange portion 24. The clinched portion 32 is also folded back to an opposite side to the flange portion 24 and toward a radially inner side of the circular tube portion 28, and a fold-back end portion 32A of the clinched portion 32 is set at a position overlapping the circular tube portion 28 as viewed in the axial direction of the circular tube portion 28. Note that the clinched portion 32 is formed by a portion of the deformation-scheduled portion 30 shown in FIG. 1 other than on the proximal portion 30A.

The second joining component 16 made of metal shown in FIG. 2C is formed in a short cylindrical shape, and is fixed to the circular tube portion 28 of the first joining component 14 when the second joining component 16 is coaxially inserted into the circular tube portion 28. Also, the second joining-object member 20 made of metal is disposed facing the first joining-object member 18 made of resin, and the second end surface 16B (one axial end surface) of the second joining component 16 is spot-welded to the second joining-object member 20. The clinched portion 32 is interposed between the first joining-object member 18 and the second joining-object member 20.

(Operation and Effect of Method for manufacturing a dissimilar material joined body) Next, an operation and an effect of the above embodiment will be described by describing the method for manufacturing the dissimilar material joined body 10 (see FIG. 2C) using the dissimilar material joining member 12.

First, in a first step of the method for manufacturing the dissimilar material joined body 10 (see FIG. 2C), the flange portion 24 is brought into contact with the first joining-object member 18 made of resin and having a panel shape shown in FIG. 2A by passing the tubular portion 22 of the first joining component 14 made of metal through the first joining-object member 18 while the first joining-object member 18 is supported by an unillustrated support portion.

In the present embodiment, the tubular portion 22 of the first joining component 14 is passed through the through-hole 18A that is previously formed in the first joining-object member 18 as one example. However, the first joining component 14 may be disposed as shown in FIG. 2A by, for example, punching the first joining-object member 18 by the distal end portion of the tubular portion 22 of the first joining component 14 to form the through-hole 18A, and thereafter moving the first joining component 14 until the flange portion 24 of the first joining component 14 comes into contact with the first joining-object member 18.

In a second step after the first step, the pair of electrodes 40, 42 are disposed on opposite sides in the axial direction of the dissimilar material joining member 12, and are moved in a direction in which the pair of electrodes 40, 42 approach each other by an unillustrated driving mechanism (see arrows ml, m2) as shown in FIG. 2B. One of the electrodes 40 stops at a position in contact with the first end surface 16A of the second joining component 16, and the other of the electrodes 42 keeps moving after coming into contact with the distal end portion of the deformation-scheduled portion 30 of the first joining component 14, and stops at a position in contact with the second end surface 16B of the second joining component 16. The pair of electrodes 40, 42 constitute a portion of a known electric clinching device, and input a compressive load with a predetermined value or more to the dissimilar material joining member 12 in the axial direction.

That is, in the second step, the deformation-scheduled portion 30 to be clinched of the dissimilar material joining member 12 is bent such that the center portion in the direction along the axial direction of the tubular portion 22 in the deformation-scheduled portion 30 is expanded to the radially outer side of the tubular portion 22 to form the fold-back portion 30X, and the first joining-object member 18 is held between the bent deformation-scheduled portion 30 and the flange portion 24. Accordingly, it is possible to fix the first joining component 14 to the first joining-object member 18 while suppressing local load input to the first joining-object member 18. Also, since a distal-end opening portion 30K of the deformation-scheduled portion 30 is not increased in diameter (or is almost not increased in diameter) when the deformation-scheduled portion 30 to be clinched is folded back and deformed as described above, a situation in which the distal-end opening portion 30K of the deformation-scheduled portion 30 cracks in the second step (that is, during clinching) can be avoided (or is highly likely to be avoided).

In the second step, for example, a known pressing device may be used instead of the electric clinching device including the pair of electrodes 40, 42 to bend the deformation-scheduled portion 30 by inputting the compressive load with a predetermined value or more to the dissimilar material joining member 12 in the axial direction.

Also, as shown in FIG. 1, in the dissimilar material joining member 12 of the present embodiment, the first tapered surface 34A described above is formed on the proximal portion 30A of the deformation-scheduled portion 30, and the second tapered surface 36 described above is formed on the distal end portion 30B of the deformation-scheduled portion 30. Therefore, when the compressive load equal to or greater than a predetermined value is applied to the tubular portion 22 in the axial direction, a load along an inclination direction of the first tapered surface 34A is applied to the proximal portion 30A of the deformation-scheduled portion 30, and a load along an inclination direction of the second tapered surface 36 is applied to the distal end portion 30B of the deformation-scheduled portion 30. The deformation-scheduled portion 30 is deformed by the loads applied as described above so as to be bent to the radially outer side of the tubular portion 22 from the proximal portion 30A, and be folded back at an intermediate portion between the proximal portion 30A and the distal end portion 30B of the deformation-scheduled portion 30 (see FIG. 2B).

Also, in the present embodiment, the step surface 34B that is formed on the proximal portion 30A of the deformation-scheduled portion 30 forms the groove portion 34 having a V shape in section together with the first tapered surface 34A, and is set to be perpendicular to the axial direction of the tubular portion 22. Therefore, when the compressive load equal to or greater than a predetermined value is applied to the tubular portion 22 in the axial direction, the deformation-scheduled portion 30 can be stably bent along a direction perpendicular to the axial direction of the tubular portion 22 from the proximal portion 30A. Therefore, when the deformation-scheduled portion 30 is bent and deformed to the radially outer side of the tubular portion 22 as shown in FIG. 2B, the first joining-object member 18 is stably held between the flange portion 24 and the deformation-scheduled portion 30.

Next, in a third step after the second step, the second joining-object member 20 made of metal and having a panel shape is disposed facing the first joining-object member 18 by inserting the second joining-object member 20 between the dissimilar material joining member 12 and the electrode 42 as shown in FIG. 2C after retracting the electrode 42 in a direction in which the electrode 42 separates from the dissimilar material joining member 12. In the third step, the second end surface 16B (one axial end surface) of the second joining component 16 is spot-welded to the second joining-object member 20 by passing electricity between the pair of electrodes 40, 42 when the second joining component 16 and the second joining-object member 20 are held between the pair of electrodes 40, 42. Note that the pair of electrodes 40, 42 are moved in a direction in which the pair of electrodes 40, 42 separate from the second joining component 16 and the second joining-object member 20 by the unillustrated driving mechanism after the third step.

Accordingly, the second joining-object member 20 made of metal can be joined to the first joining-object member 18 made of resin via the second joining component 16 and the first joining component 14. That is, the dissimilar material joined body 10 according to the present embodiment is manufactured.

Next, additional description of the dissimilar material joined body 10 having the dissimilar material joined structure manufactured by the above manufacturing method will be made. The clinched portion 32 of the first joining component 14 in the dissimilar material joined body 10 is folded back to the opposite side to the flange portion 24 and to the radially inner side of the circular tube portion 28 from a flange-shaped portion that holds the first joining-object member 18 between the flange-shaped portion and the flange portion 24, and the fold-back end portion 32A is set at a position overlapping the circular tube portion 28 as viewed in the axial direction of the circular tube portion 28. That is, in such a configuration, a distal-end opening portion 32K of the clinched portion 32 has about the same diameter as that of the circular tube portion 28. Thus, it is not necessary (or it is almost not necessary) to increase the diameter of the distal-end opening portion 32K of the clinched portion 32 during clinching. Therefore, when the dissimilar material joined body 10 is manufactured, a situation in which the distal-end opening portion 32K of the clinched portion 32 cracks during clinching can be avoided (or is highly likely to be avoided).

As described above, in accordance with the present embodiment, the second joining-object member 20 made of metal and the first joining-object member 18 made of resin can be suitably joined together.

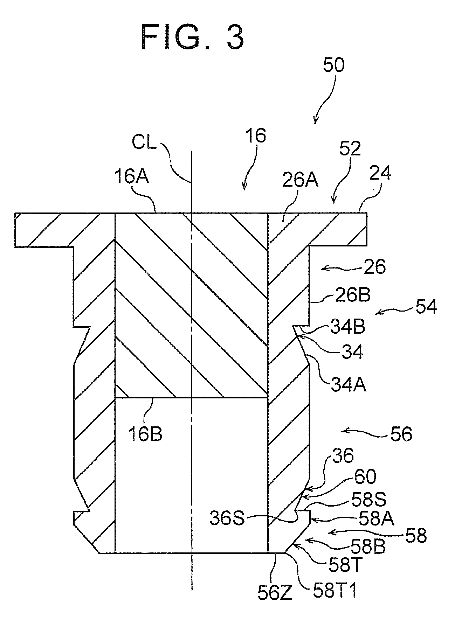

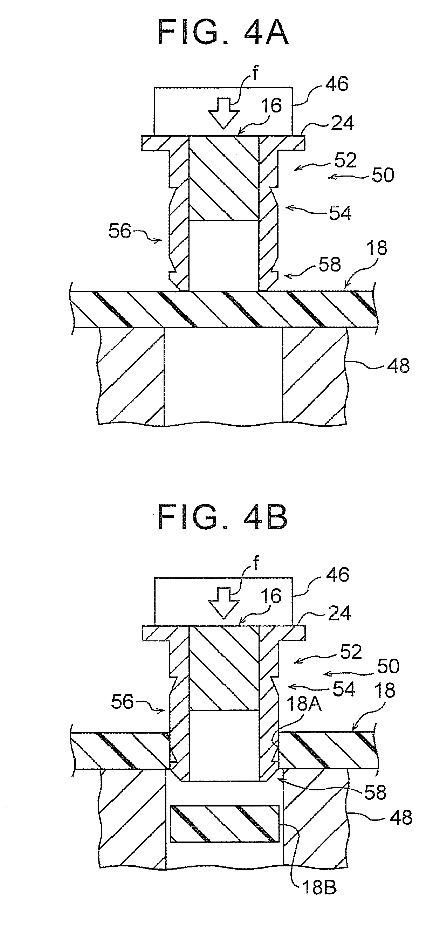

[Second Embodiment] Next, a second embodiment of the present disclosure will be described by using FIG. 3 and FIGS. 4A, 4B. FIG. 3 shows a sectional view of a dissimilar material joining member 50 according to the present embodiment, the dissimilar material joining member 50 being cut along an axial direction of the dissimilar material joining member 50 (a sectional view corresponding to FIG. 1 of the first embodiment). As shown in FIG. 3, the dissimilar material joining member 50 includes a first joining component 52 made of metal shown in FIG. 3 instead of the first joining component 14 of the dissimilar material joining member 12 of the first embodiment shown in FIG. 1. The first joining component 52 has a configuration in which a punch portion 58 shown in FIG. 3 is added to the distal end edge side of the deformation-scheduled portion 30 of the first joining component 14 of the first embodiment shown in FIG. 1. The dissimilar material joining member 50 has substantially the same configuration as that of the dissimilar material joining member 12 of the first embodiment (see FIG. 1) except for the punch portion 58. Therefore, substantially the same constituent portions as those of the first embodiment are assigned the same reference numerals, and description thereof is omitted.

Note that a tubular portion 54 of the present embodiment is composed of a portion corresponding to the tubular portion 22 of the first embodiment (see FIG. 1) and the punch portion 58. Also, a deformation-scheduled portion 56 of the present embodiment is composed of a portion corresponding to the deformation-scheduled portion 30 of the first embodiment (see FIG. 1) and the punch portion 58.

The punch portion 58 is a portion for punching the first joining-object member 18 (see FIGS. 4A, 4B) in the plate thickness direction. A portion 58A on a proximal end side of the punch portion 58 is set to the same wall thickness as that of a general portion (a portion that is not cut away (such as the short-pipe portion 26B)) of the tubular portion 54. Note that the portion 58A on the proximal end side of the punch portion 58 includes an end surface 58S that forms a groove portion 60 having a V shape in section together with the second tapered surface 36, and the end surface 58S is set to be perpendicular to an axial direction of the tubular portion 54.

Also, a tapered surface 58T is formed in a portion including a distal end portion 58B of the punch portion 58 by cutting away an outer peripheral surface of the portion over an entire periphery. The tapered surface 58T is inclined toward a radially inner side of the tubular portion 54 and toward a distal end edge side of the deformation-scheduled portion 56. A distal end position 58T1 of the tapered surface 58T is located on the radially inner side of the tubular portion 54 with respect to a distal end position 36S of the second tapered surface 36. That is, an area of a distal end surface 56Z of the deformation-scheduled portion 56 is set to be smaller than an area of a distal end surface 30Z of the deformation-scheduled portion 30 in the first embodiment shown in FIG. 1 in consideration of punching of the first joining-object member 18 (see FIGS. 4A, 4B). Note that an inclination angle of the tapered surface 58T shown in FIG. 3 and a shape of the punch portion 58 are set in consideration of a load when the first joining-object member 18 (see FIGS. 4A, 4B) is punched and a load during clinching.

FIGS. 4A, 4B show sectional views of a step of forming the through-hole 18A in the first joining-object member 18 by using the dissimilar material joining member 50 in FIG. 3. To be more specific, FIG. 4A shows a state in which the dissimilar material joining member 50 starts to press the first joining-object member 18, and FIG. 4B shows a state in which the dissimilar material joining member 50 punches the first joining-object member 18 to form the through-hole 18A.

As shown in FIG. 4A, the first joining-object member 18 is supported by a circular tube-shaped support base 48 on an outer peripheral side of a portion where the through-hole is to be formed. The dissimilar material joining member 50 is disposed on an upper side of the first joining-object member 18 with the punch portion 58 being directed toward the first joining-object member 18. The dissimilar material joining member 50 is pressed from the upper side by a punch 46 (see an arrow f). Accordingly, the punch portion 58 of the dissimilar material joining member 50 (the first joining component 52) punches the first joining-object member 18 to form the through-hole 18A in the first joining-object member 18 as shown in FIG. 4B. Note that a portion punched from the first joining-object member 18 is denoted by reference character 18B in the drawings.

Here, a method for manufacturing a dissimilar material joined body using the dissimilar material joining member 50 will be briefly described. In the present embodiment, the dissimilar material joining member 50 of the present embodiment is used instead of the dissimilar material joining member 12 in the first embodiment (see FIG. 1), and a method similar to the method for manufacturing the dissimilar material joined body 10 shown in FIGS. 2A, 2B, 2C is applied. Accordingly, a dissimilar material joined body (not shown) which is almost the same as the dissimilar material joined body 10 in the first embodiment and to which the dissimilar material joined structure of the present disclosure is applied can be manufactured.

Note that the first to third steps (see FIGS. 2A to 2C) can be performed subsequent to the step in FIG. 4B since the electrode 42 shown in FIG. 2B can be disposed inside a tube of the support base 48 shown in FIGS. 4A, 4B after the step in FIG. 4B when an opening diameter of the support base 48 is set to be slightly larger.

In accordance with the configuration of the present embodiment, substantially the same operation and effect as those of the first embodiment described above can be obtained.

[Supplementary explanation of the embodiments] In the dissimilar material joining members 12, 50 of the above embodiments, the tubular portions 22, 54 are formed in a circular tube shape, and the second joining component 16 is formed in a short circular cylindrical shape. Although such a configuration is more preferable, for example, the tubular portion may be formed in a rectangular tube shape, and the second joining component may be formed in a short rectangular cylindrical shape. Similarly, in the dissimilar material joined structure of the above first embodiment, the tube portion of the first joining component 14 is the circular tube portion 28. However, the tube portion of the first joining component may be a rectangular tube portion.

Also, as a modification of the above embodiments, a groove-shaped portion that is cut away over an entire periphery may be formed in the center portion between the proximal portion and the distal end portion in an inner peripheral surface of the deformation-scheduled portions 30, 56 of the first joining components 14, 52 in order to induce bending of the deformation-scheduled portions 30, 56 during clinching in addition to the above configuration.

Also, as a modification of the above embodiments, an outer peripheral surface of the deformation-scheduled portion of the first joining component may be formed in a curved shape that is set so as to have a larger diameter (be increased in diameter) gradually toward the center portion between the proximal portion and the distal end portion.

Also, in the above embodiments, the step surface 34B forming the groove portion 34 having a V shape in section together with the first tapered surface 34A is set to be perpendicular to the axial direction of the tubular portions 22, 54 in the proximal portion of the deformation-scheduled portions 30, 56. Although such a configuration is more preferable, for example, the surface forming the groove portion together with the first tapered surface in the proximal portion of the deformation-scheduled portion may be set to be slightly inclined with respect to the direction perpendicular to the axial direction of the tubular portion.

Also, in the above first embodiment, the case in which the first joining-object member 18 is a floor panel, and the second joining-object member 20 is a rocker panel has been described as one example. However, the first joining-object member and the second joining-object member may be other members such as a constituent member of a vehicle side door.

Note that the above embodiments and the above plurality of modifications may be appropriately combined together and carried out.

Although examples of the invention have been described above, the invention is not limited to the above examples, and it goes without saying that the invention can be variously modified and carried out without departing from the scope of the invention.

## Claims

1. A dissimilar material joining member (12; 50) comprising:
a tubular portion (22) that passes through a first joining-object member (18) made of resin;
a flange portion (24) that is extended in a flange shape to a radially outer side of the tubular portion (22) from one end in an axial direction of the tubular portion (22);
a deformation-scheduled portion (30) to be clinched, the deformation-scheduled portion (30) being the other end side in the axial direction of the tubular portion (22);
a first joining component (14) made of metal in which the deformation-scheduled portion (30) configured to hold the first joining-object member (18) between the deformation-scheduled portion (30) and the flange portion (24) by being bent such that a center portion in a direction along the axial direction of the tubular portion (22) is expanded to the radially outer side of the tubular portion (22) to form a fold-back portion when a compressive load equal to or greater than a predetermined value is applied to the tubular portion (22) in the axial direction; and
a second joining component (16) made of metal that is formed in a short cylindrical shape, and is fixed to the tubular portion (22) of the first joining component (14) when the second joining component (16) is coaxially inserted into the tubular portion (22), and is configured to be spot-welded to a second joining-object member (20) made of metal at one end surface in the axial direction of the second joining component (16).

2. The dissimilar material joining member according to claim 1, wherein
a proximal portion (30A) of the deformation-scheduled portion (30) includes a first tapered surface (34A), the first tapered surface (34A) being inclined to a radially inner side of the tubular portion (22) toward an opposite side to a distal end edge side of the deformation-scheduled portion (30) by cutting away an outer peripheral surface of the proximal portion (30A) over an entire periphery, and
a distal end portion (30B) of the deformation-scheduled portion (30) includes a second tapered surface (36), the second tapered surface (36) being inclined to the radially inner side of the tubular portion (22) toward the distal end edge side of the deformation-scheduled portion (30) by cutting away an outer peripheral surface of the distal end portion (30B) over an entire periphery.

3. The dissimilar material joining member according to claim 2, wherein
the proximal portion (30A) includes a step surface (34B), the step surface (34B) forming a groove portion (34) having a V shape in section together with the first tapered surface (34A), and being set to be perpendicular to the axial direction of the tubular portion (22).

4. A dissimilar material joined structure (10) comprising:
a first joining-object member (18) made of resin;
a tube portion (28) that passes through the first joining-object member (18);
a flange portion (24) that is extended in a flange shape to a radially outer side of the tube portion (28) from one end in an axial direction of the tube portion (28);
a first joining component (14) made of metal that includes a clinched portion (32), the clinched portion (32) being extended in a flange shape to the radially outer side of the tube portion (28) from the other end in the axial direction to hold the first joining-object member (18) between the clinched portion (32) and the flange portion (24), and including a fold-back end portion (32A) folded back to an opposite side to the flange portion (24) and to a radially inner side of the tube portion (28), the fold-back end portion (32A) being set at a position overlapping the tube portion (28) as viewed in the axial direction;
a second joining component (16) made of metal that is formed in a short cylindrical shape, and is fixed to the tube portion (28) of the first joining component (14) when the second joining component (16) is coaxially inserted into the tube portion (28); and
a second joining-object member (20) made of metal that is disposed facing the first joining-object member (18), one end surface in the axial direction of the second joining component (16) being spot-welded to the second joining-object member (20).

5. A method for manufacturing a dissimilar material joined body using the dissimilar material joining member according to any one of claims 1 to 3, the manufacturing method comprising:
bringing the flange portion (24) into contact with the first joining-object member (18) by passing the tubular portion (22) through the first joining-object member (18);
after performing the contact, bending the deformation-scheduled portion (30) such that the center portion in the direction along the axial direction in the deformation-scheduled portion (30) is expanded to the radially outer side of the tubular portion (22) to form the fold-back portion, and holding the first joining-object member (18) between the bent deformation-scheduled portion (30) and the flange portion (24); and
after performing the holding, spot-welding the one end surface in the axial direction of the second joining component (16) to the second joining-object member (20) by disposing the second joining-object member (20) facing the first joining-object member (18).
